(19) Europäisches Patentamt

European Patent Office

Office européen des brevets

(11) Veröffentlichungsnummer: **0 088 305**
**B1**

(12) **EUROPÄISCHE PATENTSCHRIFT**

(45) Veröffentlichungstag der Patentschrift:
**07.01.88**

(51) Int. Cl.⁴: **B 23 P 6/00,** B 23 K 9/04

(21) Anmeldenummer: **83101852.8**

(22) Anmeldetag: **25.02.83**

(54) Verfahren und Vorrichtung zur Innenauskleidung metallener Lageraugen.

(30) Priorität: **06.03.82 DE 3208146**

(43) Veröffentlichungstag der Anmeldung:
**14.09.83 Patentblatt 83/37**

(45) Bekanntmachung des Hinweises auf die Patenterteilung:
**07.01.88 Patentblatt 88/1**

(84) Benannte Vertragsstaaten:
**AT BE CH DE FR GB IT LI NL SE**

(56) Entgegenhaltungen:
**WO - A - 81/03138**
**DD - A - 135 166**
**DE - A - 2 605 841**
**DE - B - 1 219 144**
**FR - A - 1 502 197**
**FR - A - 2 061 272**
**FR - A - 2 295 814**
**US - A - 4 017 201**

(73) Patentinhaber: **Füwesi, Peter, Zeilweg 7,**
**D-6951 Schefflenz-U. (DE)**

(72) Erfinder: **Füwesi, Peter, Zeilweg 7, D-6951 Schefflenz-U.**
**(DE)**

(74) Vertreter: **Hach, Hans Karl, Dr., Tarunstrasse 23,**
**D-6950 Mosbach-Waldstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Schweisskopf und Schweisskopfhalterung zur elektrischen Schutzgasauftragsschweissung an zylindrischen Innenwänden wobei der Schweisskopf an einem dreh- und längsverschieblichen Antriebselement befestigt ist, eine Strom-, Schutzgas- und Schweissdrahtversorgung besitzt und einen Träger aufweist, in dem stationär ein Trägerkanal vorgesehen ist, der zu einer in der Peripherie des Trägers angeordneten Gadsüse führt, innerhalb derer in einem gebogenen Gleitrohr der Schweissdraht geführt ist.

Bei einer aus der DE-A-2 605 841 bekannten Vorrichtung wird zur Innenauskleidung von Lageraugen metaller Lagerteile zunächst das Lagerauge gereinigt und überschüssig auf die abgedrehte Lagerfläche des Auges Material aufgetragen, mit nebeneinander und überlappend aufgesetzten Schweissraupen. Der Materialauftrag wird anschliessend auf die ordentliche Lagerfläche abgedreht. Dabei ist das Lagerteil in eine Drehbank eingespannt und wird während des Schweissvorganges gedreht.

In vielen Fällen zum Beispiel bei grossen unhandlichen Lagerteilen, ist es nicht möglich, dass Lagerteil exakt um die Achse des Lagerauges zu drehen.

Bei einer Vorrichtung der eingangs genannten Art, die aus der FR-A-2 061 272 bekannt ist, können metallene Auskleidungen an einem stillstehenden Lagerteil vorgenommen werden, weil der Schweisskopf dreh- und längsverschlieblich ist. Der Schweissvorgang muss aber während des Drehens des Schweisskopfes unterbrochen werden, so dass ein solcher Innenauftrag sehr mühselig aus axial nebeneinander gelegten Raupen erzeugt werden kann, weil für jede Raupe ein neuer Schweissvorgang gefahren werden muss.

Aufgabe der Erfindung ist es, zur Innenauskleidung eine durchgehende axial gerichtete Schweissraupe aufzutragen, auf einer stillstehenden Innenwand.

Die Lösung dieser Aufgabe ist im Anspruch 1 gekennzeichnet.

Die Erfindung ist anwendbar bei Bolzenlagern schwerer Maschinen, vorzugsweise bei Bolzenlagern, deren Belastung im Gewichtsbereich von 100 kg (Kilogramm) und darüber liegt. Solche Bolzenlager kommen als Schwenklager zum Anlenken gegeneinander beweglicher Arme und dergleichen vor, es kommen aber auch Drehlager in Frage. Bevorzugte Anwendungsgebiete finden sich bei schweren Baumaschinen und schwerem militärischen Gerät.

Die Erfindung wird nun anhand der beigefügten Zeichnung erläutert.

In der Zeichnung zeigt:

Figur 1 geschnitten ein Bolzenschwenklager,

Figur 2 den einen Lagerarm aus Figur 1 mit zentriert befestigtem kombinierten Schweiss- und Abdrehgerät,

Figur 3 eine in Figur 2 nur strichpunktiert angedeutete verstellbare Befestigung,

Figur 4 das zentriert angebrachte Gerät aus Figur 2 beim Schweissen,

Figur 5 das zentriert angebrachte Gerät aus Figur 2 beim Abdrehen,

Figur 6 im Schnitt ein ausgeschlagenes Lagerauge,

Figur 7 das Lagerauge aus Figur 6 mit Materialauftrag im Überschuss,

Figur 8 einen Schweisskopf im Querschnitt,

Figur 9 den Ausschnitt IX aus Figur 8,

Figur 10 den Ausschnitt X aus Figur 8,

Figur 11 die Teilansicht gemäss dem Pfeil XI aus Figur 8,

Figur 12 die Schweissdüse aus Figur 8 geschnitten, und

Figur 13 einen Prallring aus Figur 12 perspektivisch.

In der Zeichnung ist mit 1 ein gabelförmiger, eiserner Lagerarm des Bolzenschwenklagers 2 bezeichnet mit zwei Lageraugen 3, 4, in denen, schwenkbar um die eiserne Lagerachse 8, ein an einem Lagerarm 6 befestigter eiserner Lagerbolzen 7 schwenkbar gelagert ist. Wenn die Lageraugen 3 und 4 ausgeschlagen sind und repariert werden sollen, wird der Lagerarm 6 mit dem Lagerbolzen 7 abmontiert, so dass die beiden Lageraugen 3 und 4 zugänglich sind. Zur Zentrierung wird eine Zentrierstange 5 koaxial zur Lagerachse 8 in zwei konusförmigen Spannklammern 9, 10 befestigt. An zu diesem Zweck am Lagerarm 1 angeschweissten Laschen 11 bis 14 wird, ausgerichtet auf die zentrierte Stellung der Zentrierstange 5, ein kombiniertes Schweiss- und Abdrehgerät 15 und ein Zwischenlager 16 festgelegt. Auf das Gerät 15 ist wahlweise ein Abdrehkopf 31 oder ein Schweisskopf 25 aufsetzbar. Der Schweisskopf 25 schweisst elektrisch mit Schutzgas.

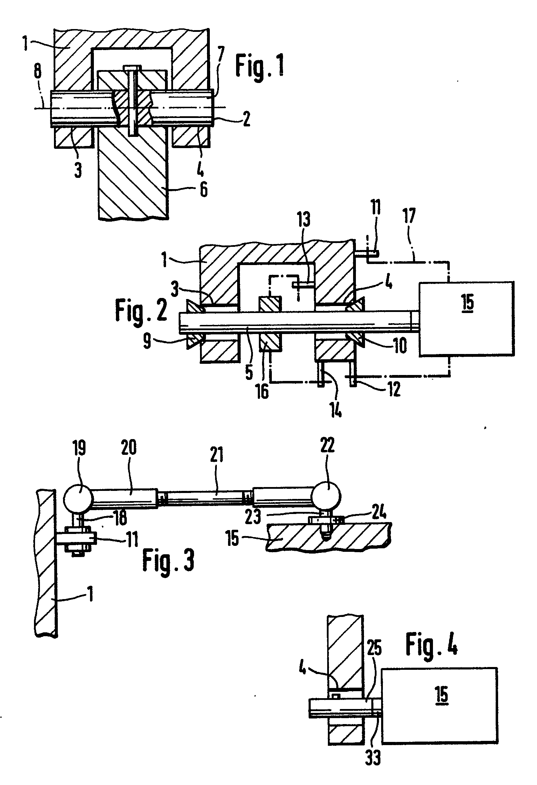

Die mechanische Verbindung zwischen den Laschen 11 bis 14 einerseits und dem Gerät 15 dem Zwischenlager 16 andererseits ist in Figur 2 nur durch strichpunktierte Linien angedeutet. Ein Beispiel der Ausgestaltung einer solchen Verbindung entsprechend der strichpunktierten Linie 17 ist in Figur 3 dargestellt.

An der Lasche 11 ist ein Querträger 18 verschraubt, an dem, schwenkbar um zwei gekreuzte Achsen in einem Gelenk 19 eine Schraubmuffe 20 gelagert ist, in die ein Schraubbolzen 21 mehr oder weniger weit eingeschraubt ist. Der Schraubbolzen 21 ist gelenkig über zwei gekreuzte Achsen in dem Gelenk 22 an dem Querträger 23 gelagert, der am Gehäuse des Gerätes 15 mit dem Flansch 24 angeflanscht ist. Die Gelenke 19 und 22 sind in jeder einstellbaren Gelenkstellung durch nicht dargestellte Elemente arretierbar, so dass eine feste, starre, stabile Verbindung zwischen der Lasche 11 und dem Gerät 15, die auf die zentrierte Lage des Gerätes 15 eingerichtet werden kann, herstellbar ist.

Nachdem das Gerät 15 und das Zwischenlager 16 auf diese Weise zur Lagerachse 8 justiert ist, wird auf das Gerät 15 ein Schweisskopf 25 aufgesetzt, mit dem in Form einer zur Achse 8 koaxialen Wendel durch eine oder mehrere Schweissraupenschichten Material im Überschuss aufgetragen wird.

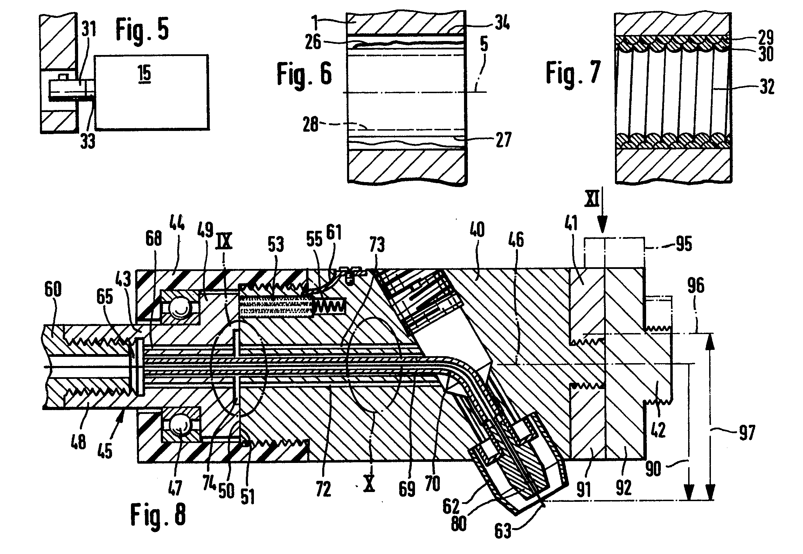

In Figur 6 ist die ausgeschlagene Lagerfläche des Auges 4 mit 26 bezeichnet. Die ordentliche Lagerfläche ist durch die Linie 27 angezeigt. Es wird zunächst auf eine koaxiale Bohrung 34 ausgedreht. Dann wird Material im Überschuss aufgetragen bis etwa zu der gestrichelt gezeichneten Linie 28. Das geschieht durch Auftragen von zwei Raupenschichten 29, 30, wie in Figur 7 dargestellt. Jede Raupenschicht besteht aus einer einzigen um die Achse 8 gewendelten Raupe 32, deren Raupengänge überlappend nebeneinanderliegen, so dass sich durch die Schicht beziehungsweise Schichten ein lückenloser Materialauftrag bildet.

Nach dem Materialauftrag wird der Schweisskopf 25 gegen den Abdrehkopf 31 ausgetauscht und mit dem immer noch koaxial justierten Gerät 15 das überschüssig aufgetragene Material bis auf die ordentliche Lagerfläche gemäss Linie 27 abgedreht.

Das Ausdrehen des gegenüberliegenden Lagerauges 3 erfolgt auf die gleiche Weise, wobei jedoch der Schweisskopf 25 und der Abdrehkopf 31 auf eine Verlängerung der Antriebsspindel 33 gesteckt werden. Diese Verlängerung kann in dem Zwischenlager 16 zwischengelagert werden, so dass man beide Lageraugen 3 und 4 mit dem einmal zentrierten Gerät 15 mit Materialauftrag belegen und auf das gewünschte Mass zentriert abdrehen kann.

Ist das geschehen, dann werden die Laschen 11 bis 14 abgetrennt und ein gegebenenfalls reparierter oder ausgetauschter Lagerbolzen 7 mit dem zugehörigen Lagerarm 6 wird wieder eingesetzt. Das Bolzenlager ist nun passgenau zentriert und hat sehr harte Lageraugen 3 und 4 entsprechend dem vorzugsweise verwendeten sehr harten Schweissmaterial.

Als Abdrehkopf 31 kommen bekannte Abdrehköpfe zum Innenausdrehen von Bohrungen in Frage. Der Schweisskopf 25 ist so ausgestaltet, dass er im Austausch gegen den Abdrehkopf 31 auf die Antriebsspindel 33 passt, er wird, anhand der Figuren 8 bis 13 näher erläutert.

Der Schweisskopf besteht aus einem metallenen, elektrisch leitenden Träger 40 von etwa kreiszylindrischer Grundform, an dessen einem Ende eine elektrisch isolierende Anschlusskupplung 41 angebracht ist mit einem Kupplungselement 42, das auf das freie Ende der Antriebsspindel 33 passt. Am anderen Ende ist am Träger 40 eine Stutzenkupplung 43 angeordnet, deren Stutzenstück 45 drehbar um die Trägerachse 46, in einem Kugellager 47 innerhalb eines fest mit dem Träger verbundenen Isolieraufsatzes 44 aus elektrisch isolierendem Material gelagert ist. Das Stutzenstück 45 besteht aus dem mit seinem Ende frei aus dem Träger 40 herausragenden Stutzen 48 und einem Flansch 49, der fest mit dem Stutzen 48 verbunden ist. Der Flansch 49 steht mit einer Gleitfläche 50, die senkrecht auf der Achse 46 steht, der Gegenfläche 51 des Trägers 40 gegenüber. Das Stutzenstück 45 besteht aus elektrisch leitendem Metall, ebenso wie der Träger 40. Zur elektrischen Kontaktgabe zwischen dem Flansch 49 und dem Träger 40 sind auf dem Umfang verteilt mehrere Kohlebürsten, zum Beispiel die Kohlebürste 53, in Achsrichtung 46 unter der Kraftwirkung einer Druckfeder 55 längsverschieblich gegen die Gleitfläche 50 gepresst im Träger gelagert. Die Kohlebürsten sind mit elektrischen Anschlüssen direkt mit dem Träger 40 leitend verbunden. Ein in den Stutzen 48 eingeschraubter, flexibler Zuleitungsschlauch 60 dient als Anodenzuleitung für den Schweissstrom, der über das Stutzenstück 45, die Kohlebürsten, zum Beispiel die Kohlebürste 53, die Anschlussleitung 61 der Kohlebürsten und den Träger 40 an die Schweissdüse 80 gelangt.

Koaxial innerhalb des Stutzenstücks 45 ist ein Isolierrohr 70 verlegt, innerhalb dessen der über den Zuleitungsschlauch 60 zugeführte Schweissdraht 63 verlegt ist. Der Schweissdraht 63 gelangt an die Schweissdüse 80.

Der Trägerkanal 69 ist in den Träger 40 eingelassen und beginnt fluchtend mit dem Stutzen 48 beziehungsweise der Bohrung 68 und ist daran anschliessend gekrümmt in eine Richtung schräg zur Achsrichtung 46. Das innerhalb des Trägerkanals 69 angeordnete Isolierrohr 70 dient zur elektrischen Isolierung des Schweissdrahtes und ist innen mit einer Gleitfläche ausgebildet, um das Nachführen des Schweissdrahtes entlang der Biegung des Trägerkanals durch Gleiten zu erleichtern.

Neben dem Trägerkanal 69 sind im Träger 40 Gaskanäle 72, 73 vorgesehen, durch die das Schutzgas vom Zuleitungsschlauch 60 an die Gasdüse 62 gelangt. Den Mündungen der Gaskanäle 72, 73 gegenüber ist in der Gleitfläche 50 des Flansches 49 eine ringförmige Mulde 74 ausgespart, die das Einströmen des Schutzgases in die Gaskanäle 72, 73 erleichtert.

Die Gasdüse 62 weist eine innere Schweissdüse 80 auf zur Führung des Schweissdrahtes 63 an die Schweissstelle 81. Um diese Schweissdüse 80 herum erstreckt sich ein Schutzgasmantel 82, so dass zwischen der Schweissdüse und der Gasdüse 62 ein ringförmiger Schutzgaskanal 83 ausgespart wird, dessen Mündung auf die Schweissstelle 81 gerichtet ist. In diesen Schutzgaskanal münden die zur Schutzgasführung dienenden Gaskanäle 72, 73. Den Mündungen der Gaskanäle 72, 73 gegenüber steht eine Prallplatte 85, die zu einem Prallring 86 gehört, der aussen einen Ring 87 aufweist, mit dem der Prallring 86 auf einer rückwärtigen Wandfläche 89 des Trägers 40 abgestützt ist. In dem Ring 87 sind auf den Umfang verteilt Durchbrüche 88 vorgesehen, durch die das Schutzgas radial nach aussen gerichtet in den Schutzgaskanal 83 strömen kann, und zwar wegen der Durchbrüche 88 gleichmässig auf den Umfang verteilt, so dass es wie ein den Schweissdraht 63 umhüllender Gasmantel die Schweissstelle vor vorzeitiger Oxydation schützt.

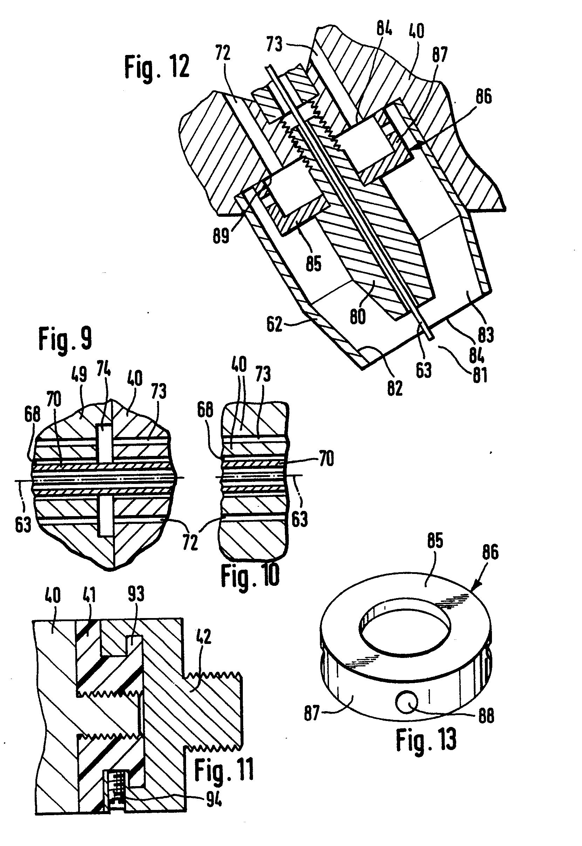

Der Abstand der Schweissdüse von der Trägerachse 46 gemäss Pfeil 90 muss entsprechend dem Radius des auszubessernden Auges bemessen sein, so dass der Schweissvorgang mit geeignetem Abstand der Schweissdüse von der Stelle, an der das Material aufgetragen werden soll, erfolgt. Um die Schweissdüse in dieser Richtung einzujustieren, könnte man sie an dem Träger ausfahrbar anbringen. Man könnte auch dementsprechend verschieden dimensionierte Träger zur Verfügung stellen. Einfacher und vielseitiger anwendbar ist jedoch eine Ausgestaltung, bei der die Anschlusskupplung 41 eine Verstellbarkeit gestattet, wie dies aus Figur 11 ersichtlich ist. Die Anschlusskupplung 41 besteht demnach aus zwei Teilen 91, 92, die mit einer geradlinigen Schwalbenschwanzführung 93 in Pfeilrichtung 90 und in Gegenrichtung gegeneinander verstellbar sind und durch eine Madenschraube 94 in der eingestellten Stellung gegeneinander festlegbar sind. Gemäss Figur 8 ist ausgezogen gezeichnet die Anschlusskupplung 41 in koaxialer Lage. Die Gasdüse 62 hat demzufolge minimalen axialen Abstand gemäss Pfeil 90. Soll dieser Abstand vergrössert werden, dann wird das Teil 92 gegen das Teil 91 verschoben, zum Beispiel bis auf die durch die strichpunktierten Linien 95 angedeutete Stellung. Die Achse 96, um die sich dann der Schweisskopf bei Betrieb dreht, fällt nicht mehr mit der Trägerachse 46 zusammen, sondern ist dieser gegenüber versetzt. Diese Achse ist massgebend für den Abstand des Schweisskopfes, der gemäss Pfeil 97 nun um den Versatz grösser ist als der Pfeil 90.

Bei Schweissbetrieb wird, ebenso wie beim Abdrehen, der Schweisskopf um die Achse 46 beziehungsweise eine parallel dazu gelegene Achse 96 gedreht und dabei bei jeder Umdrehung vorgeschoben, bis auf diese Weise eine aus einer gewendelten Schweissraupe bestehende Raupenschicht gebildet ist. Man kann auf dem Rückweg oder nach neuem Ansatz von vorne eine zweite Raupenschicht auftragen und so fort. Wenn dabei von Raupenschicht zu Raupenschicht der Abstand des Schweisskopfes nachgestellt werden soll, wird das anhand der Schwalbenschwanzführung aus Figur 11 vorgenommen.

**Patentansprüche**

1. Schweisskopf und Schweisskopfhalterung zur elektrischen Schutzgasauftragsschweissung an zylindrischen Innenwänden (3) wobei der Schweisskopf (15) an einem dreh- und längsverschieblichen Antriebselement (33) befestigt ist, eine Strom-, Schutzgas- und Schweissdrahtversorgung besitzt und einen Träger (40) aufweist, in dem stationär ein Trägerkanal (69) vorgesehen ist, der zu einer in der Peripherie des Trägers angeordneten Gasdüse (62) führt, innerhalb derer in einem gebogenen Gleitrohr (70) der Schweissdraht (63) geführt ist, dadurch gekennzeichnet, dass der elektrisch leitende Träger (40) an einem Ende eine elektrisch isolierende, radial verstellbare Anschlusskupplung (92) besitzt, über die der Träger am freien Ende einer als Antriebselement dienenden Antriebsspindel (33) achsparallel befestigt ist, und dass am anderen Ende eine Stutzenkupplung (43) mit einem zur Trägerachse (46) koaxialen Stutzen (48) zum Anschluss eines Schlauches (60) für die Zufuhr von Schutzgas. Schweissdraht und Schweissstrom drehbar um die Trägerachse (46) gelagert ist.

2. Schweisskopf nach Anspruch 1, dadurch gekennzeichnet, dass die Anschlusskupplung (92) und die Stutzenkupplung (43) an einander gegenüberliegenden Enden des Trägers (40) angeordnet sind.

3. Schweisskopf nach Anspruch 1 oder 2, dadurch gekennzeichnet, dass der Zuleitungsschlauch (60) als Anodenzuleitung für den Schweissstrom ausgebildet ist.

4. Schweisskopf nach Anspruch 1, 2 oder 3, dadurch gekennzeichnet, dass der Kupplungsteil in einem elektrisch isolierenden Isolieraufsatz (44) des Trägers (40) steckt.

5. Schweisskopf nach einem der Ansprüche 1 bis 4, dadurch gekennzeichnet, dass im Bereich der Gleitfläche (50) der Stutzenkupplung (43) eine ringförmige Mulde (74) ausgespart ist, die mit den Mündungen der von der Gleitfläche (51) des Trägers (40) ausgehenden, zur Gasdüse (62) führenden Gaskanälen (72, 73) kommuniziert.

6. Schweisskopf nach einem der Ansprüche 1 bis 5, dadurch gekennzeichnet, dass der Schweissdraht (63) innerhalb der Schweissdüse (80) unter elektrischer Kontaktgabe an die Schweissstelle geführt wird, dass die Schweissdüse (80) umgeben ist von einem Schutzgasmantel (82), der einen die Schweissdüse (80) ringförmig umgebenden, an die Schweissstelle führenden Schutzgaskanal (83) umgibt, dass die Mündung (84) der Gaskanäle (72, 73) gegen eine im rückwärtigen Teil des Schutzgaskanals (83) angeordnete Prallplatte (85) gerichtet ist, die mit ihrem Umfang nicht ganz bis an den Schutzgasmantel (82) reicht und mit einem angesetzten Ring (87) auf einer rückwärtigen Wandfläche (89) des Trägers (40) abgestützt ist, und dass in dem Ring (87) auf den Umfang verteilt Öffnungen (88) zum Durchtritt des Schutzgases in den Schutzgaskanal (83) der Gasdüse (62) vorgesehen sind.

7. Schweisskopf nach einem der Ansprüche 1 bis 6, dadurch gekennzeichnet, dass eine Anschlusskupplung (41) zum Übertragen des Drehmomentes auf den Träger (40) am Träger angeordnet ist, dass der Träger eine quer zur Trägerachse gerichtete Führung (93) aufweist, mit der der Träger, bezogen auf seine Trägerachse (46), gegenüber der Rotationsachse (96) verstellbar ist.

8. Schweisskopf nach einem der vorhergehenden Ansprüche 1 bis 7, dadurch gekennzeichnet, dass die Anschlusskupplung (41) auf die Antriebsspindel (33) eines zum Ausdrehen von Durchbrüchen geeigneten Abdrehgerätes (15) passt.

**Claims**

1. Welding head and welding head mounting for electrical inertgas surface welding on concentric interior surfaces (3) at which the welding head (15) is mounted at a drive (33) which is rotatable and movable on the longitudinal axis and which posseses an electrical- inertgas- and welding- wire· supply and a support in which a support duct (69) is provided, leading to the welding nozzle (62) in the circumference of the support, within the duct the welding wire (63) is lead through a curved tube (70).

Characterized through the fact, that the support has got an electrical isolated radial movable clutch (92) through that the support with its free end is mounted parallel to a drive spindle (33) serving as drive element, and that at the other end a bearing (43) is mounted, with a connecting piece (47) coaxial to the support and rotatable around the support, for connection of a hose for supply of inert gas, welding wire and welding current.

2. Welding head according to claim 1, characterized in the way, that the mounting clutch (92) and the Connection piece clutch (43) are mounted at the opposing ends of the support (40).

3. Welding head, according to claim 1 or 2, characterized in the way, that the leading hose (60) is carried out as anode circuit.

4. Welding head according to claim 1, 2 or 3 characterized in the way, that the clutch is mounted within an electrical isolated cap at the support (40).

5. Welding head according to one of the claims 1 to 4, characterized in the way, that in the area of the slip plane (50) of the connecting piece Clutch (43) there is a ring shaped hollow (74) connected with the gastubes, going out from the slip plane of the support (40) to the gas nozzle (62).

6. Welding head according to one of the claims 1 to 5, characterized in the way, that the welding wire (63) is lead inside the welding nozzle with electrical contact to the welding piece, that the welding nozzle (80) is surrounded by an inert gas cover (82) which is surrounding an inert gas tube (81), that is round the welding nozzle (80) and leads to the welding piece, that the opening (84) of the gas tubes (72, 73) are aimed at a plate (85) arranged in the backward area of the inert gas tube (83), which reaches nearly to the inert gas cover (82) and is mounted with a fixed ring to a backward wallplate of the support (40) and that the ring is covered with outlets for the inert gas to let the gas into the gastube of the gas nozzle.

7. Welding head according to one of the claims 1 to 6, characterized in the way, that a connecting clutch (41) is fixed at the support for carrying over the torque to the support, that the support has a guide (93) cross to the support axis, so the support related to its axis is movable against the rotation axis.

8. Welding head according to one of the claims 1 to 7, characterized in the way, that the connecting clutch (41) fits to the drive spindle (33) of a rotary drill device suitable for rotary drilling out breaches.

**Revendications**

1. Tête de soudage et bride de support de tête de soudage pour le soudage à l'arc sous gaz protecteur sur les surfaces intérieures de corps creux cylindriques (3), la tête de soudage (15) étant fixée à un élément d'entraînement (33) pouvant être tourné et coulissé dans le sens longitudinal, pourvue d'un tube d'alimentation en courant, d'un tube d'alimentation en gaz protecteur et d'un tube d'alimentation en fil-électrode, et possédant une poutre (40) dans laquelle est prévu un canal de poutre stationnaire (69) débouchant sur une tuyère à gaz (62) située dans la périphérie de la poutre, tuyère à l'intérieur de laquelle débouche le fil-électrode (63) dans un tube de guidage recourbé (70), caractérisée en ce que la poutre (40), conductrice de courant, possède à l'une des extrémités un élément de couplage (92) à isolation électrique à réglage radial, par lequel la poutre est fixée, parallèlement à l'axe, à l'extrémité libre d'une broche d'entraînement (33) faisant office d'élément d'entraînement, et caractérisée en ce qu'un accouplement à manchon (43) pourvu d'un manchon (48) coaxial à l'axe (46) de la poutre pour le raccordement d'un tuyau flexible (60) destiné à l'alimentation en gaz protecteur, en fil-électrode et en courant de soudage est logé, à l'autre extrémité, de manière à pouvoir tourner autour de l'axe (46) de la poutre.

2. Tête de soudage suivant la revendication 1, caractérisée en ceci que l'élément de couplage (92) et l'accouplement à manchon (43) sont situés à des extrémités opposées de la poutre (40).

3. Tête de soudage suivant la revendication 1 ou 2, caractérisée en ceci que le tube d'alimentation (60) est conçu en tant que ligne d'amenée de l'anode pour le courant de soudage.

4.Tête de soudage suivant la revendication 1, 2 ou 3, caractérisée en ceci que l'élément d'accouplement est enfiché dans une pièce isolante (44) de la poutre (40) pour l'isolation électrique.

5. Tête de soudage suivant l'une les revendications 1 à 4, caractérisée en ceci qu'une cavité (74) de forme annulaire est prévue dans la zone de surface de coulissage (50) de l'accouplement à manchon (43), cette cavité communiquant avec les embouts des tubes de gaz (72, 73) joignant la surface de coulissage (51) de la poutre (40) et la tuyère à gaz (62).

6. Tête de soudage suivant l'une des revendications 1 à 5, caractérisée en ceci que le fil-électrode (63) à l'intérieur de la tuyère de soudage (80) est amené à l'endroit de soudure par un contact électrique, caractérisée en ceci que la tuyère de soudage (80) est entourée d'une enveloppe de gaz protecteur (82) qui entoure un tuyau de gaz protecteur (83) entourant la tuyère de soudage (80) de manière circulaire et menant à l'endroit de soudure, caractérisée en ceci que l'embout (84) des tubes de gaz (72, 73) est dirigé sur une plaque de déviation (85) située dans la partie arrière du tuyau de gaz protecteur (83), n'atteignant pas tout à fait, en raison de sa taille, l'enveloppe de gaz protecteur (82) et appuyée, grâce à un anneau fixé (87), sur une paroi arrière (89) de la poutre (40), et caractérisée en ce que des ouvertures (88) ont été prévues tout autour de l'anneau (87) pour permettre le passage du gaz protecteur dans le tuyau de gaz protecteur (83) de la tuyère à gaz (62).

7. Tête de soudage suivant l'une des revendications 1 à 6, caractérisé en ceci qu'un élément de couplage (41) est fixé à la poutre pour la transmission du moment de couple à la poutre (40), caractérisée en ceci que la poutre présente un guide (93) oblique par rapport à l'axe de la poutre, grâce auquel la poutre, rapportée à son axe (46), est réglable par rapport à l'axe de rotation (96).

8. Tête de soudage suivant l'une des revendications 1 à 7, caractérisée en ceci que l'élément de couplage (41) s'adapte sur la broche d'entraînement (33) d'un dispositif de coupure des gaz (15) prévu en cas de fuite.

Fig.1

Fig.2

Fig.3

Fig.4

Fig. 5

Fig. 6

Fig. 7

Fig. 8

0 088 305

Fig. 12

Fig. 9

Fig. 10

Fig. 11

Fig. 13